# EUROPÄISCHE PATENTANMELDUNG

(11) **EP 2 290 010 A1**
(43) Veröffentlichungstag der Anmeldung: **02.03.2011**
(21) Anmeldenummer: 09174184.3
(22) Anmeldetag: 27.10.2009
(51) Int. Cl.: C08L 95/00

(54) **Flux-Additiv für Bitumenmassen**

(30) Priorität: 18.08.2009 DE 102009026396
(71) Anmelder: Green Finance AG, 93053 Regensburg (DE)
(72) Erfinder: Fischer, Uwe, 16225 Eberswalde (DE); Fischer, Stephan, 36277 Schenklengsfeld (DE)
(74) Vertreter: Graf Glück Habersack Kritzenberger

(57) **Zusammenfassung**

Beschrieben wird ein Flux-Additiv für Bitumenmassen, welches herstellbar ist durch Veresterung eines freie Fettsäuren enthaltenden Fettsäuretriglycerid-Ausgangsgemisches und anschließender Destillation des durch die Veresterung entstandenen Fettsäurealkylester-Gemisches. Der nach dem im Wesentlichen vollständigen Abdestillieren der Fettsäurealkylester erhaltene Destillationsrückstand bildet erfindungsgemäß das Flux-Additiv.

## Beschreibung

### Technisches Gebiet

Die vorliegende Erfindung betrifft ein Flux-Additiv für Bitumenmassen.

### Stand der Technik

Wegen seiner vorteilhaften Eigenschaften wie Witterungsbeständigkeit, Chemikalienbeständigkeit, Wasserfestigkeit und -dichtheit sowie seinem ausgezeichneten Preis-/Leistungsverhältnis spielt Bitumen als Baustoff, insbesondere im Asphaltstraßenbau und in der Abdichtungstechnik eine wichtige Rolle. Nachteilig an Bitumen ist allerdings eine ausgeprägte Temperaturempfindlichkeit aufgrund seiner thermoplastischen Eigenschaften. So kommt es bei Einsatz eines weichen, tieftemperaturflexiblen Bitumentyps im Asphaltstraßenbau im Hochsommer zur Spurrinnenbildung während ein härterer Bitumentyp im Winter zu Kontraktionsrissen im Asphaltbelag führt.

Eine Verbesserung der Gebrauchstemperaturspanne von Bitumen wurde durch die Entwicklung von polymermodifizierten Bitumina erreicht. Durch Zusatz von beispielsweise SBS, ABS, NR, SBR, EP(D)M, EVA, EEA oder EMA werden deutliche Verbesserungen in der Spurrillenresistenz bei gleichzeitig gutem Tieftemperaturverhalten und guter Ermüdungsfestigkeit erzielt. Allerdings weisen polymermodifizierte Bitumina im Vergleich zu unmodifizierten Bitumina eine höhere Viskosität auf, was zu einer erhöhten Einbautemperatur und problematischer Verdichtung des Asphaltbelages und damit zu höheren Kosten und einer erhöhten Umweltbelastung durch Bitumennebel während der Herstellung und Verarbeitung führt.

Zur zumindest teilweisen Überwindung dieser Nachteile werden zu Bitumenmassen sogenannte Flux-Additive zugegeben. Dabei handelt es sich um native Öle und Fette, die mit Luftsauerstoff reagieren und zähe, ermüdungsfeste und witterungsbeständige Filme mit sehr guter Substrathaftung ausbilden. Besonders häufig wird in diesem Zusammenhang Rapsöl als Flux-Additiv verwendet. So beschreibt beispielsweise die DE 195 19 539 A1 den Einsatz von pflanzlichen Ölen wie Rapsöl oder Rapsölderivaten als "trocknende" Öle ("Fluxkomponente") in Bitumenemulsionen zur Herstellung von Kaltmischgut oder von Straßenbelägen.

Rapsöl stellt außerdem einen wichtigen Rohstoff bei der Herstellung von Biodiesel dar. Biodiesel ist die Bezeichnung für eine Vielzahl von Kraftstoffen auf der Grundlage von Estern, die aus pflanzlichen Ölen oder tierischen Fetten gewonnen werden. Biodiesel sind typischerweise die Alkylester von Fettsäuren, wobei Methyl, Ethyl und Isopropyl die üblichen Alkyle darstellen.

Aufgrund der stark gestiegenen Nachfrage ist der Preis für jede Art von nachwachsendem Rohstoff zur Energiegewinnung in den letzten Jahren dramatisch gestiegen. Der zur Gewinnung von Rapsöl notwendige Raps stellt somit inzwischen einen relevanten Kostenfaktor beim Einsatz von Rapsöl als Flux-Additiv für Bitumen dar.

Es besteht daher ein Bedarf an alternativen Flux-Additiven für Bitumen, die ähnlich günstige Eigenschaften wie die aus dem Stand der Technik bekannten Flux-Additive aufweisen und gleichzeitig kostengünstiger hergestellt werden können.

### Darstellung der Erfindung

Aufgabe der vorliegenden Erfindung ist es, ein Flux-Additiv für Bitumen zur Verfügung zu stellen, welches im Vergleich zu den aus dem Stand der Technik bekannten Flux-Additiven möglichst kostengünstig hergestellt werden kann.

Diese Aufgabe wird erfindungsgemäß durch das Flux-Additiv für Bitumenmassen gemäß dem unabhängigen Anspruch 1 gelöst. Weitere vorteilhafte Details, Aspekte und Ausgestaltungen der vorliegenden Erfindung ergeben sich aus den abhängigen Ansprüchen, der Beschreibung, der Figur und den Beispielen.

Das erfindungsgemäße Flux-Additiv für Bitumenmassen ist herstellbar durch Veresterung eines freie Fettsäuren enthaltenden Fettsäuretriglycerid-Ausgangsgemisches und anschließender Destillation des durch die Veresterung entstandenen Fettsäurealkylester-Gemisches. Der nach dem im wesentlichen vollständigen Abdestillieren der Fettsäurealkylester erhaltene Destillationsrückstand bildet erfindungsgemäß das Flux-Additiv.

Zur Gewinnung des erfindungsgemäßen Flux-Additivs wird also ein freie Fettsäuren enthaltendes Fettsäuretriglycerid-Ausgangsgemisch verestert. Dabei handelt es sich um nichts anderes als ein Verfahren zur Herstellung von Biodiesel. Wie bereits erwähnt ist Biodiesel die Bezeichnung für Kraftstoffe auf der Grundlage von Estern, die aus pflanzlichen Ölen oder tierischen Fetten gewonnen werden.

Die Herstellung der den Biodiesel bildenden Alkylester aus Ölen und Fetten kann durch direkte säurenkatalysierte Veresterung des Öls mit einem Alkohol, durch Umwandlung des Öls in Fettsäuren mit anschließender säurenkatalysierter Veresterung mit einem Alkohol oder durch basenkatalysierte Umesterung des Öls mit einem Alkohol erfolgen.

Zur Herstellung des erfindungsgemäßen Flux-Additivs kann grundsätzlich jedes bekannte Verfahren zur Herstellung von Biodiesel eingesetzt werden, welches zu einem Rohbiodiesel führt, der abschließend durch eine Destillation gereinigt wird. Der dabei anfallende Destillationsrückstand bildet erfindungsgemäß das Flux-Additiv für Bitumenmassen.

Im Rahmen des vorliegenden Textes wird der Begriff "Veresterung" für alle drei genannten Reaktionen zur Herstellung von Biodiesel verwendet. Unter den Begriff "Veresterung" fällt also sowohl die Reaktion einer Säure mit einem Alkohol (Esterbildung) wie auch die Reaktion eines Alkohols mit einem Ester (Umesterung).

Bei der Herstellung von Biodiesel wird ein Fett oder Öl mit einem Alkohol wie beispielsweise Methanol in Gegenwart eines Katalysators verestert, wobei Glycerin und Alkylester erzeugt werden. Der Alkohol wird zur Erhöhung der Reaktionsgeschwindigkeit im Überschuss zugegeben und zur Wiederverwendung zurückgewonnen. Als Katalysator wird üblicherweise Natrium- oder Kaliumhydroxid verwendet, das mit dem Alkohol vermischt eingesetzt wird. Verfahren zur Herstellung von Biodiesel sind beispielsweise in der DE 102 43 700, der DE 102 45 758, der DE 102 57 250 oder der DE 199 08 978 beschrieben.

Ein Haupteinsatzgebiet von Biodiesel stellt die Verwendung als Kraftstoff für Pkws dar. Pkw-Dieselmotoren benötigen einen sauber brennenden, stabilen Kraftstoff, der unter einer Vielzahl von Betriebsbedingungen mit konstanter Qualität als Energiequelle genutzt werden kann. Aber auch ganz unabhängig vom Einsatzgebiet des Biodiesels stellen die im Produktgemisch enthaltenen Verunreinigungen ein Problem dar. Bei den Verunreinigungen handelt es sich insbesondere um durch Nebenreaktionen wie beispielsweise Polymerisationen entstehende organische Verbindungen.

Zur Entfernung solcher Verunreinigungen aus dem Biodiesel wird häufig in einem letzten Verfahrensschritt eine Destillation des Biodiesels durchgeführt, wodurch ein hochreiner Biodiesel erhalten wird. Ein Problem bei diesem Vorgehen stellen die als Destillationsrückstand zurückbleibenden polymeren Verunreinigungen dar, die als Sondermüll entsorgt werden müssen.

Die vorliegende Erfindung löst das Problem der Entsorgung des polymeren Destillationsrückstands durch dessen Verwendung als Flux-Additiv für Bitumenmassen. Somit wird von der vorliegenden Erfindung nicht nur ein Flux-Additiv für Bitumen zur Verfügung gestellt, welches im Vergleich zu den aus dem Stand der Technik bekannten Flux-Additiven kostengünstig hergestellt werden kann. Vielmehr handelt es sich bei dem erfindungsgemäßen Flux-Additiv um einen Abfallstoff, der üblicherweise unter hohen Kosten entsorgt werden muss.

Unter dem Ausdruck "im Wesentlichen vollständigen Abdestillieren der Fettsäurealkylester" wird im Rahmen des vorliegenden Textes ein unter dem Fachmann bekannten, üblichen Bedingungen durchgeführter Destillationsvorgang verstanden. Die Fettsäurealkylester werden zwar nahezu vollständig von dem polymeren Flux-Additiv abdestilliert, was aber natürlich nicht bedeuten kann, dass bei genauerer Analyse des Flux-Additivs keinerlei Rückstand von Fettsäurealkylestern gefunden wird. Eine in dem Flux-Additiv verbleibende geringe Menge an Fettsäurealkylestern verhindert aber nicht, dass es sich um ein erfindungsgemäßes durch "im Wesentlichen vollständigen Abdestillieren der Fettsäurealkylester" hergestelltes Flux-Additiv handelt.

Bevorzugt erfolgt die Veresterung des freie Fettsäuren enthaltenden Fettsäuretriglycerid-Ausgangsgemisches durch Umesterung von Pflanzenöl, insbesondere durch Umesterung von Rapsöl, durch saure Veresterung freier Fettsäuren, durch saure Veresterung freier Fettsäuren und anschließende Umesterung von Gemischen aus freien Fettsäuren und Rapsöl oder durch saure Veresterung freier Fettsäuren und anschließende Umesterung von Gemischen aus freien Fettsäuren und Altspeisefetten.

Bei den Fettsäurealkylestern handelt es sich bevorzugt um Fettsäurealkylester ausgewählt aus der Gruppe bestehend aus Fettsäuremethylester, Fettsäureethylester, Fettsäurepropylester, Fettsäurebutylester und deren Gemischen.

Besonders bevorzugt handelt es sich um Fettsäuremethylester. Im Falle von Fettsäuremethylestern erfolgt die Destillation durch eine Vakuumdestillation bei 30 bis 80 mbar und besonders bevorzugt bei einer Temperatur von 195°C bis 280°C. Unter den genannten Bedingungen erfolgt ein besonders schnelles und nahezu vollständiges Abdestillieren der Fettsäuremethylester von dem Flux-Additiv.

Die vorliegende Erfindung bezieht sich auch auf eine Bitumenmasse, die Bitumen und mindestens ein erfindungsgemäßes Flux-Additiv umfasst. Das Bitumen ist dabei bevorzugt ausgewählt aus Straßenbaubitumen, Polymerbitumen, Hartbitumen, Oxidationsbitumen, Extraktionsbitumen, Naturasphalten, Fällungsbitumen, Destillationsbitumen sowie deren Gemischen.

Besonders bevorzugt enthält die Bitumenmasse zusätzlich zumindest ein Polymer. Die Polymerkomponente der Bitumenmasse ist vorzugsweise ausgewählt aus der Gruppe bestehend aus SBS, SEBS, SEPS, SIS, PE, PP, (a)PP, (i)PP, EVA, EMA, EBA, EEA, E(P)DM, CR, NR, SBR und ACR sowie deren Gemischen. Die Bedeutung dieser Abkürzungen ist dem Fachmann bekannt. Solche Polymerbitumenmassen werden im allgemeinen durch intensives Vermischen von Bitumen (Destillationsbitumen, Oxidationsbitumen, Fällungsbitumen, Naturasphalt und dergleichen sowie deren Gemischen) mit den genannten Polymeren hergestellt. Ökonomisch von Bedeutung sind Polymerbitumina auf der Basis von Styrolcopolymerisaten (SBS, SIS) und auf der Basis von PP, insbesondere (a)PP.

Gemäß einer besonders bevorzugten Ausführungsform der vorliegenden Erfindung liegt der Anteil des Flux-Additivs an der Bitumenmasse im Bereich von 1 bis 10 Gew.% bezogen auf das Gesamtgewicht der Bitumenmasse.

Bevorzugt enthält die Bitumenmasse weitere Zusatzstoffe, die ausgewählt sind aus der Gruppe bestehend aus Haftvermittlern, Vernetzungsmitteln, Alterungsschutzmitteln, Fasern, armierenden Feinfüllern, Reaktionsbeschleunigern, Sikkativen, Vernetzungskatalysatoren, Korrosionsschutzadditiven und UV Stabilisatoren.

Die vorliegende Erfindung umfasst auch eine Asphaltmasse, ausgewählt aus der Gruppe Asphaltbeton, Gussasphalt, Asphaltmastix, Sandasphalt und Splittmastixasphalt. Die Asphaltmasse enthält eine Bitumenmasse, welche Bitumen und mindestens ein erfindungsgemäßes Flux-Additiv umfasst.

Die vorliegende Erfindung umfasst auch ein Verfahren zur Herstellung eines Flux-Additivs für Bitumenmassen umfassend die Schritte Herstellung eines Fettsäurealkylester-Gemisches durch Veresterung eines freie Fettsäuren enthaltenden Fettsäuretriglycerid-Ausgangsgemisches, und im wesentlichen vollständiges Abdestillieren des Fettsäurealkylester-Gemisches, wobei der Destillationsrückstand das Flux-Additiv für Bitumenmassen bildet. Zur Bedeutung des Begriffs "Veresterung" und des Ausdrucks "im Wesentlichen vollständigen Abdestillieren der Fettsäurealkylester" wurde oben bereits ausgeführt.

Grundsätzlich kann jedes bekannte Verfahren zur Herstellung von Biodiesel eingesetzt werden, um zu einem Rohbiodiesel zu gelangen, der abschließend durch eine Destillation gereinigt wird. Der dabei anfallende Destillationsrückstand bildet erfindungsgemäß das Flux-Additiv für Bitumenmassen.

Bevorzugt erfolgt die Herstellung des Fettsäurealkylester-Gemisches durch Umesterung von Pflanzenöl, insbesondere durch Umesterung von Rapsöl, durch saure Veresterung freier Fettsäuren, durch saure Veresterung freier Fettsäuren und anschließende Umesterung von Gemischen aus freien Fettsäuren und Rapsöl oder durch saure Veresterung freier Fettsäuren und anschließende Umesterung von Gemischen aus freien Fettsäuren und Altspeisefetten.

In dem erfindungsgemäßen Verfahren werden besonders bevorzugt Fettsäurealkylester ausgewählt aus der Gruppe bestehend aus Fettsäuremethylester, Fettsäureethylester, Fettsäurepropylester, Fettsäurebutylester und deren Gemischen hergestellt.

Insbesondere bevorzugt werden Fettsäuremethylester hergestellt. Im Falle von Fettsäuremethylestern erfolgt die Destillation bevorzugt durch eine Vakuumdestillation bei 30 bis 80 mbar und besonders bevorzugt bei einer Temperatur von 195°C bis 280°C. Unter den genannten Bedingungen erfolgt ein besonders schnelles und nahezu vollständiges Abdestillieren der Fettsäuremethylester von dem Flux-Additiv.

Die vorliegende Erfindung umfasst auch die Verwendung des bei der Destillation eines Fettsäurealkylester-Gemisches anfallenden Destillationsrückstands als Flux-Additiv in Bitumenmassen. Besonders bevorzugt wird der bei der Destillation eines Fettsäuremethylester-Gemisches anfallende Destillationsrückstand als Flux-Additiv in Bitumenmassen verwendet.

### Kurze Beschreibung der Zeichnungen

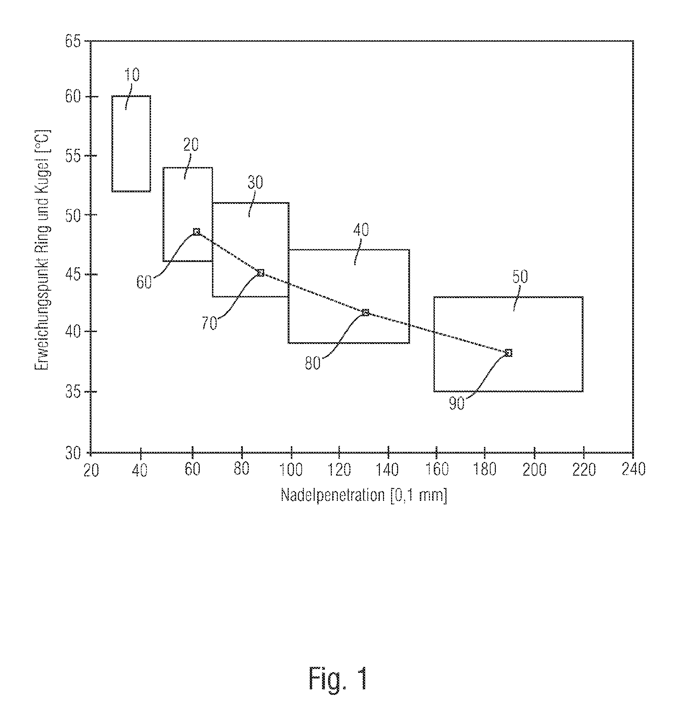

Die Erfindung soll nachfolgend anhand eines Ausführungsbeispieles im Zusammenhang mit der Figur 1 näher erläutert werden. Die Figur 1 zeigt eine grafische Auftragung der für verschiedene Bitumenmischungen experimentell ermittelten Kenngrößen "Erweichungspunkt Ring und Kugel" gegen "Nadelpenetration".

### Wege zur Ausführung der Erfindung

Die folgenden Beispiele erläutern die Erfindung und sind nicht als einschränkend aufzufassen.

Es wurden drei Mischungen des erfindungsgemäßen Flux-Additivs mit einem handelsüblichen Destillationsbitumen B 50/70, welches die im Straßenbau am häufigsten verwendete Bitumensorte darstellt, hergestellt. Dem Destillationsbitumen B 50/70 wurden 2, 4 bzw. 6 Gew.% Flux-Additiv bezogen auf das Gesamtgewicht der Bitumenmischung zugegeben. Durch Erwärmen und Rühren in einem Labormischer kann eine homogene Verteilung des Flux-Additivs erreicht werden. Als Blindkontrolle wurde das Destillationsbitumen B 50/70 ohne Zusatz eines Flux-Additivs verwendet.

An den vier Proben wurden die folgenden Bitumenkenndaten ermittelt:

### Nadelpenetration gemäß DIN EN 1426

Die Nadelpenetration ist ein Maß für die Härte des Bitumens. Sie wird bestimmt durch den Weg, den eine mit 100 g belastete Nadel bei 25°C in 5 s in das zu prüfende Bitumen eindringt. Der Messwert wird in der Einheit 0,1 mm angegeben und dient als die Grundlage für die Bezeichnung der im Straßenbau verwendeten Bitumensorten.

### Erweichungspunkt Ring und Kugel gemäß DIN EN 1427

Der Übergang vom festen in den flüssigen Zustand ist bei Bitumen gleitend. Das hat zur Folge, dass sich kein Schmelzpunkt bestimmen lässt. Daher wird zur Bestimmung des Übergangs vom festen in den flüssigen Zustand der sogenannte Erweichungspunkt ermittelt. Dazu wird eine in einen Messingring eingefüllte Bitumenschicht unter dem Gewicht einer aufgelegten Stahlkugel langsam erwärmt und erfährt dabei eine Verformung. Der Erweichungspunkt Ring und Kugel ist die Temperatur, bei der die Verformung eine festgelegte Größe erreicht. Je härter (höher viskos) das Bitumen ist, desto höher liegt sein Erweichungspunkt.

### Brechpunkt nach Fraaß gemäß. DIN EN 12593

Der Brechpunkt nach Fraaß kennzeichnet den Übergang vom plastischen in den spröden Zustand und dient somit zur Beurteilung des Kälteverhaltens von Bitumen. Im Rahmen der Prüfung wird eine auf ein Blechplättchen aufgetragene Bitumenschicht um 1°C je Minute abgekühlt und danach mehrmals definiert durchgebogen. Der Brechpunkt nach Fraaß ist die Temperatur in °C, bei der die Bitumenschicht beim Biegen bricht oder Risse bekommt.

### Duktilität gemäß. DIN 52013

Die Duktilität kennzeichnet die Streckbarkeit eines Bitumens: eine Bitumenprobe wird unter Wasser bei einer festgelegten Prüftemperatur von 7, 13 oder 25°C mit konstanter Dehngeschwindigkeit auseinander gezogen. Die Länge des sich bildenden Fadens gibt den Duktilitätswert in cm an. Eine hohe Duktilität ist vorteilhaft, da sie einen Hinweis darauf gibt, dass sich ein Bitumen auch bei niedrigen Temperaturen ohne Rissbildung verformen lässt. Die Qualitätsprüfung stellt aber auch eine indirekte Homogenitätsprüfung dar, weil Inhomogenitäten zu einer geringeren Dehnbarkeit führen.

### Elastische Rückstellung gemäß DIN 52021-1

Ab einem Polymergehalt von ca. 3 M.-% zeigen polymermodifizierte Bitumen ein ausgeprägt elastisches Verhalten, was durch die sogenannte elastische Rückstellung im Rahmen einer Duktilitätsprüfung nachgewiesen wird. Dabei wird ein auf 20 cm gedehnter Bitumenfaden mittig durchtrennt. Nach einer definierten Rückstelldauer wird die Verkürzung der beiden "Halbfäden" gemessen und auf die Faden-Ausziehlänge bezogen. Die elastische Rückformung beträgt bei polymermodifizierte Bitumen mindestens 50 %. Bei Destillationsbitumen beträgt die elastische Rückstellung nur ca. 20 %, wodurch eine Unterscheidung beider Bindemittelarten möglich ist.

### Dynamisches Scherrheometer gemäß AASHTO TP 5 zur Charakterisierung des Verformungsverhaltens

Zur Charakterisierung des Verformungsverhaltens von Bitumen dient das Dynamische Scherrheometer - DSR. Zwischen einer feststehenden und einer beweglichen Scheibe befindet sich eine Bitumenprobe. Durch Aufbringen eines Drehmomentes wird die Platte oszillierend bewegt und die sich zeitlich verzögert einstellende Verformung gemessen. Die zeitliche Verzögerung zwischen dem aufgebrachten Drehmoment und der sich einstellenden Verformung wird mit Phasenwinkel δ bezeichnet. Bei einem rein elastischen Verhalten ist dieser Phasenwinkel gleich Null, bei einem rein viskosen Verhalten ist der Phasenwinkel gleich 90°.

Der berechnete komplexe Schubmodul G* ist ein Maß für den Gesamtwiderstand des Bitumens gegen Verformung, wenn es einer wiederholten Scherbeanspruchung ausgesetzt wird. Daher ist ein möglichst hoher komplexer Schubmodul als günstig anzusehen.

Der komplexe Schubmodul kann anhand des Phasenwinkels in einen viskosen und einen elastischen Anteil aufgeteilt werden. Daher kann man mit dieser Prüfmethode auch sehr gut das elastische Verhalten eines Bindemittels prüfen.

**Tabelle 1 zeigt die Ergebnisse der experimentellen Untersuchungen:**

| | B 50/70 +0% Flux-Additiv | B 50/70 +2% Flux-Additiv | B 50/70 +4% Flux-Additiv | B 50/70 +6% Flux-Additiv |
|---|---|---|---|---|
| Nadelpenetration [0, 1 mm] | 63 | 89 | 132 | 190 |
| Erweichungspunkt RuK [°C] | 48,7 | 45,2 | 41,8 | 38,4 |
| Duktilität bei 25°C [cm] | >100 | >100 | >100 | >100 |
| Elastische Rückstellung [%] | 13 | 18 | 18 | 16 |
| Brechpunkt nach Fraaß [°C] | -13 | -15 | -20 | -21 |
| Dyn. Scherrheometer bei 60°C | | | | |
| - Kompl. Schubmodul G* [Pa] | 2.616 | 1.611 | 966 | 651 |
| - Phasenwinkel δ [°] | 85 | 86 | 87 | 88 |

Aus Tabelle 1 kann entnommen werden, dass die Nadelpenetration um jeweils etwa 20 % pro 1 % Flux-Additiv-Zugabe ansteigt, während gleichzeitig pro 1 % Flux-Additiv-Zugabe der Erweichungspunkt um rund 2°C sinkt. Mit zunehmendem Gehalt an Flux-Additiv sinken ebenso der Brechpunkt nach Fraaß und das komplexe Schubmodul. Die Duktilität und die elastischen Eigenschaften bleiben unverändert.

Die Zugabe des erfindungsgemäßen Flux-Additivs bewirkt also eine Erweichung des Bitumens, wodurch die Verarbeitbarkeit und das Kälteverhalten deutlich verbessert werden. Die Bitumenmasse wird erst bei niedrigeren Temperaturen spröde und somit rissanfällig.

In der Figur 1 ist die Kenngröße "Erweichungspunkt Ring und Kugel [°C]" gegen die Kenngröße "Nadelpenetration [0,1 mm]" aufgetragen. Um die Größenordnung der Änderungen besser einzuschätzen zu können, sind in der Figur 1 die für die 3 Mischungen und die Vergleichsprobe ermittelten Kenngrößen der Spezifikation verschiedener Bitumensorten gemäß DIN EN 12591 gegenübergestellt.

Das Bezugszeichen 60 kennzeichnet dabei die für die Vergleichsprobe Destillationsbitumen B 50/70 ermittelten Werte. Daneben sind die Werte für die Mischungen Destillationsbitumen B 50/70 mit 2 % Flux-Additiv (70), Destillationsbitumen B 50/70 mit 4 % Flux-Additiv (80) und Destillationsbitumen B 50/70 mit 6 % Flux-Additiv (90) angegeben. Die Spezifikation der Bitumensorte B 30/45 gemäß DIN EN 12591 ist mit dem Bezugszeichen 10 gekennzeichnet, während die Spezifikation der Bitumensorte B 50/70 das Bezugszeichen 20, die Spezifikation der Bitumensorte B 70/100 das Bezugszeichen 30, die Spezifikation der Bitumensorte B 100/150 das Bezugszeichen 40 und die Spezifikation der Bitumensorte B 160/220 das Bezugszeichen 50 trägt.

Aus der Figur 1 wird deutlich, dass - vereinfacht ausgedrückt - eine Zugabe von 2 Gew.% des erfindungsgemäßen Flux-Additivs das Bitumen um eine Bitumensorte "weicher" macht. Der Effekt entspricht damit dem von Raps- oder anderen Fluxölen.

## Patentansprüche

1. Flux-Additiv für Bitumenmassen herstellbar durch Veresterung eines freie Fettsäuren enthaltenden Fettsäuretriglycerid-Ausgangsgemisches und anschließender Destillation des durch die Veresterung entstandenen Fettsäurealkylester-Gemisches, wobei der nach dem im Wesentlichen vollständigen Abdestillieren der Fettsäurealkylester erhaltene Destillationsrückstand das Flux-Additiv bildet.

2. Flux-Additiv für Bitumenmassen nach Anspruch 1, **dadurch gekennzeichnet, dass** die Veresterung des freie Fettsäuren enthaltenden Fettsäuretriglycerid-Ausgangsgemisches
- durch Umesterung von Pflanzenöl, insbesondere durch Umesterung von Rapsöl, oder
- durch saure Veresterung freier Fettsäuren oder
- durch saure Veresterung freier Fettsäuren und anschließende Umesterung von Gemischen aus freien Fettsäuren und Rapsöl oder
- durch saure Veresterung freier Fettsäuren und anschließende Umesterung von Gemischen aus freien Fettsäuren und Altspeisefetten erfolgt.

3. Flux-Additiv für Bitumenmassen nach zumindest einem der Ansprüche 1 und 2, **dadurch gekennzeichnet, dass** es sich bei den Fettsäurealkylestern um Fettsäurealkylester ausgewählt aus der Gruppe bestehend aus Fettsäuremethylester, Fettsäureethylester, Fettsäurepropylester, Fettsäurebutylester und deren Gemischen, bevorzugt um Fettsäuremethylester handelt.

4. Flux-Additiv für Bitumenmassen nach Anspruch 3, **dadurch gekennzeichnet, dass** die Destillation der Fettsäuremethylester durch eine Vakuumdestillation bei 30 bis 80 mbar erfolgt, wobei die Destillation der Fettsäuremethylester bevorzugt bei einer Temperatur von 195°C bis 280°C erfolgt.

5. Bitumenmasse umfassend Bitumen und mindestens ein Flux-Additiv gemäß zumindest einem der Ansprüche 1 bis 4.

6. Bitumenmasse nach Anspruch 5, **dadurch gekennzeichnet, dass** das Bitumen ausgewählt ist aus Straßenbaubitumen, Polymerbitumen, Hartbitumen, Oxidationsbitumen, Extraktionsbitumen, Naturasphalten, Fällungsbitumen, Destillationsbitumen sowie deren Gemischen.

7. Bitumenmasse nach zumindest einem der Ansprüche 5 und 6, **dadurch gekennzeichnet, dass** die Bitumenmasse zumindest ein Polymer enthält, bevorzugt ein Polymer ausgewählt aus der Gruppe bestehend aus SBS, SEBS, SEPS, SIS, PE, PP, (a)PP, (i)PP, EVA, EMA, EBA, EEA, E(P)DM, CR, NR, SBR und ACR sowie deren Gemischen.

8. Bitumenmasse nach zumindest einem der Ansprüche 5 bis 7 **dadurch gekennzeichnet, dass** der Anteil des Flux-Additivs im Bereich von 1 bis 10 Gew.% bezogen auf das Gesamtgewicht der Bitumenmasse liegt.

9. Bitumenmasse nach zumindest einem der Ansprüche 5 bis 8, **dadurch gekennzeichnet, dass** zusätzlich eine oder mehrere Komponenten ausgewählt aus der Gruppe bestehend aus Haftvermittlern, Vernetzungsmitteln, Alterungsschutzmitteln, Fasern, armierenden Feinfüllern, Reaktionsbeschleunigern, Sikkativen, Vernetzungskatalysatoren, Korrosionsschutzadditiven und UV Stabilisatoren enthalten ist.

10. Asphaltmasse, ausgewählt aus der Gruppe Asphaltbeton, Gussasphalt, Asphaltmastix, Sandasphalt und Splittmastixasphalt, umfassend eine Bitumenmasse nach zumindest einem der Ansprüche 5 bis 9.

11. Verfahren zur Herstellung eines Flux-Additivs für Bitumenmassen umfassend die Schritte
a) Herstellung eines Fettsäurealkylester-Gemisches durch Veresterung eines freie Fettsäuren enthaltenden Fettsäuretriglycerid-Ausgangsgemisches, und
b) im Wesentlichen vollständiges Abdestillieren des Fettsäurealkylester-Gemisches,
wobei der Destillationsrückstand das Flux-Additiv für Bitumenmassen bildet.

12. Verfahren nach Anspruch 11, **dadurch gekennzeichnet, dass** die Herstellung des Fettsäurealkylester-Gemisches
- durch Umesterung von Pflanzenöl, insbesondere durch Umesterung von Rapsöl, oder
- durch saure Veresterung freier Fettsäuren oder
- durch saure Veresterung freier Fettsäuren und anschließende Umesterung von Gemischen aus freien Fettsäuren und Rapsöl oder
- durch saure Veresterung freier Fettsäuren und anschließende Umesterung von Gemischen aus freien Fettsäuren und Altspeisefetten erfolgt.

13. Verfahren nach zumindest einem der Ansprüche 11 und 12, **dadurch gekennzeichnet, dass** es sich bei den Fettsäurealkylestern um Fettsäurealkylester ausgewählt aus der Gruppe bestehend aus Fettsäuremethylester, Fettsäureethylester, Fettsäurepropylester, Fettsäurebutylester und deren Gemischen, bevorzugt um Fettsäuremethylester handelt.

14. Verfahren nach Anspruch 13, **dadurch gekennzeichnet, dass** die Destillation des Fettsäuremethylester-Gemisches durch eine Vakuumdestillation bei 30 bis 80 mbar erfolgt, wobei die Destillation des Fettsäuremethylester-Gemisches bevorzugt bei einer Temperatur von 195°C bis 280°C erfolgt.

15. Verwendung des bei der Destillation eines Fettsäurealkylester-Gemisches anfallenden Destillationsrückstands als Flux-Additiv in Bitumenmassen.

16. Verwendung nach Anspruch 15, **dadurch gekennzeichnet, dass** es sich bei dem Fettsäurealkylester-Gemisch um ein Fettsäuremethylester-Gemisch handelt.
